# EUROPÄISCHE PATENTSCHRIFT

(11) **EP 3 858 715 B1**
(45) Veröffentlichungstag und Bekanntmachung des Hinweises auf die Patenterteilung: **30.11.2022**
(21) Anmeldenummer: 20155211.4
(22) Anmeldetag: 03.02.2020
(51) Int. Cl.: B62D 59/00, H02K 7/18

(54) **FAHRZEUGANHÄNGER MIT ELEKTROGENERATOR**
VEHICLE TRAILER WITH ELECTRIC GENERATOR
REMORQUE DE VÉHICULE POURVUE DE GÉNÉRATEUR ÉLECTRIQUE

(43) Veröffentlichungstag der Anmeldung: 04.08.2021
(73) Patentinhaber: Hobby-Wohnwagenwerk Ing. Harald Striewski GmbH, 24787 Fockbek (DE)
(72) Erfinder: Vogt, Andreas, DE-2536 Neumünster (DE); Gottwald, Dirk, DE-24340 Eckernförde (DE); Mertinko, Cristina, DE-83349 Palling (DE); Strasser, Josef, DE-83257 Gstadt am Chiemsee (DE); Bender, Steffen, DE-35713 Eschenburg (DE)
(74) Vertreter: Brinkmann & Partner

(56) Entgegenhaltungen:
- WO-A1-02/00492
- US-A1- 2015 076 949

## Beschreibung

Die vorliegende Erfindung betrifft einen Fahrzeuganhänger.

Fahrzeuganhänger, insbesondere Wohnanhänger, haben inzwischen sehr aufwändige elektrische Systeme, Steuerungssysteme und dergleichen, die dem Grunde nach dauerhaft mit elektrischer Energie versorgt werden müssen.

Bei modernen Zugfahrzeug-/Anhängersystemen ist jedoch die Elektronik der Zugfahrzeuge so ausgelegt, dass diese zunächst ihren eigenen Bedarf decken, somit also nicht gewährleistet ist, dass immer ausreichend elektrische Energie in den Bereich des Anhängers gelangt.

Aus dem Stand der Technik sind unterschiedliche Lösungen bekannt. Während einige der Lösungen, beispielsweise gemäß DE 20 2005 020 065 U1 oder DE 10 2017 104 747 A1, lediglich elektrische Antriebe zeigen, welche mit herkömmlichen Übertragungsmittel wie Reibrollen und Zahnriemen mit dem angetriebenen Rad verbunden sind, offenbaren die EP 2 266 831 A2 und die FR 536 268 die Verwendung eines abklappbaren Laufrades bei einem LKW-Anhänger als Antriebsquelle.

Die EP 3 473 478 A1 schlägt vor, ein power takeout mit einer durch den Achsstummel des Rades geführten Welle auszubilden, die direkt mit der rotierenden Nabe eines der Räder des Anhängers verbunden ist.

Somit umfassen die vorbekannten Systeme solche, bei welchen eine Laufrolle als relativ bewegliches Element über beispielsweise schwingende oder sonst wie flexible Systeme mit einem Generator verbunden wird, und wenigstens eine, die eine Vormontage ermöglicht, die auch hinsichtlich der Montageschritte standardisierbar ist. Alle vorbekannten Lösungen sind verschmutzungsanfällig und damit auch anfällig für Störungen und Fehlfunktion.

Aus dem Stand der Technik ist gemäß der WO 02/00492 A1 ferner ein Fahrrad bekannt, das zur Versorgung insbesondere einer Beleuchtungsanlage mit Strom über eine MagnetSpulen-Anordnung verfügt. Dabei sind vorzugsweise mehrere Magnete an einem Rad des Fahrrads angeordnet, die im bestimmungsgemäßen Verwendungsfall mit einer ortsfest an der zugehörigen Radgabel angeordneten Spule zusammenwirken.

Die US 2015/076949 A1 offenbart ein Generatorsystem für Fahrzeuge zur Erzeugung elektrischer Energie aus kinetischer Energie, wobei jede Antriebswelle, jede Achse und jedes Rad dazu ausgerüstet ist, ein rotierendes Magnetfeld mit einem Stator zu erzeugen. Ausgehend vom vorbeschriebenen Stand der Technik liegt der Erfindung die Aufgabe zugrunde, einen Fahrzeughänger und ein elektrisches System für einen Fahrzeuganhänger bereitzustellen, welches einen antreibbaren elektrischen Generator umfasst, der besonders betriebssicher ist, montagetechnisch einfach und störungsunanfällig ist und darüber hinaus eine sichere Versorgung des Anhängers gewährleistet.

Zur technischen **Lösung** dieser Aufgabe wird ein Fahrzeuganhänger mit den Merkmalen des Patentanspruchs 1 vorgeschlagen. Weitere Vorteile und Merkmale ergeben sich aus den Unteransprüchen. Anspruch 1 offenbart ein Fahrzeuganhänger, insbesondere Wohnanhänger, mit einem Chassis, das eine Achse (5) aufweist, die einendseitig mit einem ersten Rad (6) und anderendseitig mit einem zweiten Rad (7) zusammenwirkt, und das mit einer Bremseinrichtung (10) ausgestattet ist, die über endseitig der Achse (5) vorgesehene Bremsnaben (9) der Räder (6, 7) verfügt, wobei eine Bremsnabe (9) unter Zwischenordnung eines jeweiligen Schwinghebels (8) an der Achse (5) einendseitig angeordnet ist, und mit einem durch eine Bewegung des Anhängers antreibbaren elektrischen Generator, der durch Magnete und wenigstens eine Spule (14) gebildet ist, wobei die Magnete (12) in einem Ringbereich auf dem äußeren Gehäuseumfang einer Bremsnabe (9) oder auf einem separaten, zwischen einer Bremsnabe (9) und einer Felge (15) positionierten Magnetträger angeordnet sind und wobei die Spule (14) gegenüber der Bremsnabe (9) oder dem Magnetträger ortsfest am Anhänger angeordnet ist, wobei in der Spule (14) aufgrund der Bewegung der Magnete (12) eine Spannung induziert wird, wobei zur ortsfesten Anordnung der Spule (14) ein Spulenhalter (13) vorgesehen ist, der an einem zwischen Bremsnabe (9) und jeweils zugehörigem Schwinghebel (8) vorgesehenen Achsstummel eines Rads (6, 7) angeordnet ist, wobei die Spule (14) unter Belassung eines einen Spalt bildenden Abstandes zur Umlaufbahn der Magnete (12) angeordnet ist, wobei die Spule (14) hinsichtlich des Abstandes zur Umlaufbahn der Magnete (12) einstellbar ist.

Der Fahrzeuganhänger weist einen elektrischen Generator auf. Dieser ist durch eine Bewegung des Anhängers antreibbar. Dies kann beispielsweise unter Nutzung der Drehung der Achsen bzw. Wellen eines Anhängers und dessen Fahrwerk erfolgen. Übertragungen können Zahnriemen, Getriebe, Reibräder und dergleichen sein, aber auch hydraulische Systeme, pneumatische Systeme und dergleichen.

Wesentlich ist, dass eine beliebige Bewegung des Anhängers umgesetzt wird in eine Rotationsbewegung eines elektrischen Generators. So können auch Federwege, Bremswege und dergleichen in an sich bekannter Weise genutzt werden, um einen elektrischen Generator zu betreiben.

Der Generator ist über ein Ladegerät mit einem Akkumulator oder sonstigen Speichersystemen verbunden, der bzw. die im Betrieb aufgeladen werden. Das Ladegerät kann etwa vom Zugfahrzeug gelieferte Energie und selbsterzeugte Energie verwerten und sicherstellen, dass die anhängerseitigen Akkumulatoren weitgehend geladen sind.

In vorteilhafter Weise handelt es sich bei dem Anhänger um einen Wohnanhänger, also einen Wohnwagen mit einem vollständigen elektrischen Nutzsystem und elektrischen Steuerungen.

Es wird eine elektrische Einheit für Anhänger gekennzeichnet, welche neben dem Generator auch einen Akkumulator und ein Ladegerät bzw. Laderegler, zumindest jeweils mit Spannungsregelung, umfasst sowie eine Antriebseinheit zum Antrieb des Generators bei Bewegung des Anhängers.

Je nach Anwendung ist es auch sinnvoll, einen Generator allein, allenfalls mit einer Spannungsregelung, zu betreiben, um direkt Verbraucher wie z.B. eine Bremsanlage, einen Kühlschrank oder dergleichen zu betreiben.

Die erfindungsgemäße Lösung besteht darin, dass an einer Bremsnabe oder an einem separaten Magnetträger Permanentmagnete angeordnet sind, welche bei Bewegung der Bremsnabe bzw. der Felge an einer ortsfest am Anhänger angeordneten Spule vorbeilaufen und in dieser eine Spannung induzieren. Zu diesem Zweck wird die Spule so positioniert, dass nur ein kleiner Spalt zwischen der Spule und den vorbeilaufenden Magneten ausgebildet ist.

Die Permanentmagnete sind außenseitig an einer Bremstrommel einer Bremsnabe angeordnet. Es sind dabei eine Vielzahl von Magneten vorgesehen, die äquidistanten Abstände zueinander aufweisen und in ihrer Anordnung einen umlaufenden Magnet-Ring darstellen. Dabei sind die Magnete außenumfangseitig, das heißt zur Drehachse radial beabstandet an der Bremstrommel angebracht.

Die Magnete können als separat ausgebildete Magnete vorliegen, die miteinander in schon vorbeschriebener Weise zu einem Magnetring kombiniert und an der Bremsnabe angeordnet sind. Alternativ hierzu kann vorgesehen sein, die Magnete auf einem separaten Magnetträger anzuordnen. Dies erlaubt eine Vorkonfektionierung und gestattet es, den die Magnete bereitstellenden Magnetträger an einer Bremsnabe anzuordnen. Auch ist es in diesem Zusammenhang möglich, den Magnetträger nicht bremsnaben-seitig anzuordnen, sondern als separates Bauteil zwischen Bremsnabe und Felge zu positionieren.

Die erfindungsgemäße Ausgestaltung ermöglicht eine Vielzahl von Ausführungsformen. Von erfindungswesentlicher Bedeutung ist indes, dass eine im bestimmungsgemäßen Verwendungsfall berührungslos arbeitende Wirkverbindung zwischen Magneten einerseits und zugehöriger Spule andererseits vorgesehen ist. Dies ist im Unterschied zum Stand der Technik verschleißarm, robust in der Anwendung, sicher im Betrieb und wartungsfrei. Darüber hinaus ist die erfindungsgemäße Konstruktion auch gegenüber ungewollten Verschmutzungen unanfälliger, was die Betriebssicherheit weiter erhöht.

Die mit den Magneten zusammenwirkende Spule ist ortsfest am Anhänger angeordnet. Im Bewegungsfall kann so eine relative Bewegung zwischen den Magneten einerseits und der zugehörigen Spule andererseits stattfinden.

Die Spule kann ortsfest an einem Träger des Anhängers, an einem Rad-Schwinghebel, an einem Bremsträgerblech und/oder dergleichen angeordnet sein. Entscheidend ist die ortsfeste Positionierung der Spule, so dass sich mit dieser zusammenwirkende Magnete an dieser im Bewegungsfall vorbeidrehen können, und zwar entlang einer definierten Bewegungsbahn.

Dabei ist die Spule unter Belassung eines einen Spalt bildenden Abstands zur Bewegungs- oder Umlaufbahn der Magnete angeordnet, wobei die Abstandsbelassung vorzugsweise einstellbar ist. Es wird in diesem Zusammenhang vorgeschlagen, dass die Spule von einem Spulenhalter getragen ist. Dabei ist eine relative Verstellung von Spule und Spulenhalter möglich, was eine Spalteinstellung beziehungsweise eine Einstellung der Abstandsbelassung zwischen Spule und Magneten ermöglicht. Die Abstandsbelassung kann nach einer Ersteinstellung unveränderbar festgestellt werden. Alternativ hierzu ist es auch möglich, eine Nacheinstellbarkeit im Sinne einer Nachjustage zu ermöglichen.

Der nach der Erfindung vorgesehene Generator verfügt in schon vorerläuterter Weise über eine Spule einerseits und damit zusammenwirkenden Magneten andererseits. Diese beiden Baukomponenten lassen sich im Sinne auch einer Nachrüstung in einfacher Weise am Anhänger montieren und an eine bestehende Bordelektronik anschließen. Dabei ist eine Verwendung sowohl für gebremste als auch für ungebremste Anhänger möglich. Es können weitere elektronische Baukomponenten insbesondere zur Regelung bzw. Steuerung vorgesehen sein. Auch kann eine automatische Abstandsüberwachung und Nacheinstellung zwischen Spule und zugehörigen Magneten vorgesehen sein.

Es ist bevorzugt, je Bremsnabeeine Spule vorzusehen. Alternativ können aber auch mehrere Spulen vorgesehen sein, die mit den jeweils gleichen Magneten zusammenwirken. Alternativ oder in Kombination hierzu kann auch vorgesehen sein, dass ein Anhänger über zwei Generatoren der erfindungsgemäßen Art verfügt, beispielsweise über einen Generator je Bremsnabe . In diesem Fall sind eine Mehrzahl von Spulen vorgesehen, die jeweils mit den ihnen zugeordneten Magneten zusammenwirken.

Als Magnete werden Permanentmagnete eingesetzt, die im Bereich eines Ringsegmentes der Bremsnabe positioniert sind. Dabei werden immer abwechselnd Magnete mit unterschiedlicher Polarität angeordnet. Die Magnete können in einfacher Weise in einem Ringbereich auf dem äußeren Gehäuseumfang angeordnet werden. Daraus ergibt sich eine Nachrüstungsmöglichkeit auch für bestehende Systeme.

Die Spule wird direkt oder indirekt am Rahmen des Anhängers positioniert. Dabei kann sie hinsichtlich der Position einstellbar angeordnet sein, um den Spalt gegenüber den Magneten nachstellen zu können. Die Spule selbst ist mit einer elektrischen Schaltung verbunden, die das Ladungsmanagement übernimmt. Die Spule kann auch mit einem Gleichrichter betrieben werden, um gleich Spannung zu erzeugen.

Mit der Erfindung wird eine mit einfachen wirtschaftlichen Mitteln erstellbare Einheit zur elektrischen Versorgung eines Anhängers bereitgestellt.

Weitere Vorteile und Merkmale ergeben sich aus der folgenden Beschreibung anhand der Figuren. Dabei zeigen:
- Fig. 1: in schematisch perspektivischer Ansicht ein Chassis eines erfindungsgemäßen Fahrzeuganhängers;
- Fig. 2: in schematisch perspektivischer Darstellung ausschnittsweise das Chassis nach Fig. 1;
- Fig. 3: in schematisch perspektivischer Ansicht den Ausschnitt nach Fig. 2 aus einer anderen Blickrichtung;
- Fig. 4: in schematisch perspektivischer Ansicht den Ausschnitt nach Fig. 2 aus einer anderen Blickrichtung;
- Fig. 5: in schematisch perspektivischer Ansicht den Ausschnitt nach Fig. 2 aus einer anderen Blickrichtung;
- Fig. 6: in schematisch perspektivischer Darstellung das Chassis nach Fig. 1 und
- Fig. 7: in einer schematischen Ausschnittsdarstellung den Ausschnitt VII nach Fig. 6.

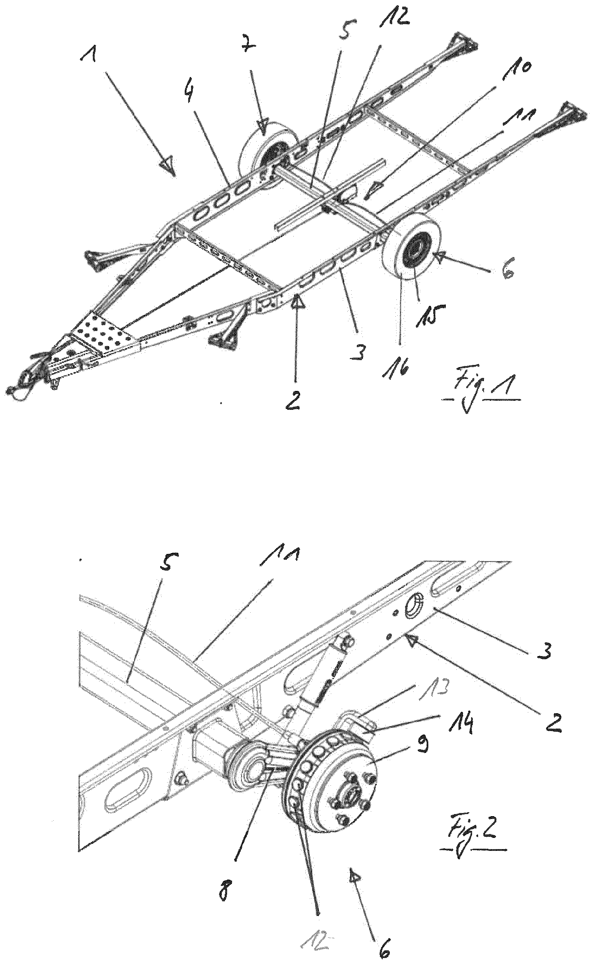

Fig. 1 lässt in schematisch perspektivischer Ansicht eine Chassis 1 eines im Näheren nicht dargestellten Fahrzeuganhängers erkennen.

Das Chassis 1 verfügt in an sich bekannter Weise über einen Rahmen oder ein Gestell 2, der bzw. das unter anderem zwei in Längsrichtung des Chassis 1 verlaufende Träger 3 und 4 aufweist. Es ist ferner eine Achse 5 vorgesehen, die einendseitig mit einem ersten Rad 6 und anderendseitig mit einem zweiten Rad 7 zusammenwirkt.

Das Chassis 1 ist ferner mit einer Bremseinrichtung 10 ausgestattet, die unter anderem über Seilzüge 11 verfügt, die zu endseitig der Achse 5 vorgesehenen Bremsnaben 9 der Räder 6 und 7 führen.

Die endseitig der Achse 5 vorgesehenen Räder 6 und 7 verfügen jeweils in an sich bekannter Weise über eine Felge 15, die im betriebsfertigen Zustand mit einem Reifen 16 ausgerüstet ist.

Wie insbesondere eine Zusammenschau der Fign. 2 bis 5 erkennen lässt, ist eine Bremsnabe 9 unter Zwischenordnung eines jeweiligen Schwinghebels 8 an der Achse 5 endseitig angeordnet. Dies ist exemplarisch in den Fign. 2 bis 5 anhand des in Fahrtrichtung linken Rades 6 dargestellt.

Wie sich aus einer Zusammenschau der Fign. 2 bis 5 ferner ergibt, ist die Bremsnabe 9 mit Permanentmagneten 12 bestückt. Dabei sind eine Vielzahl von Magneten 12 vorgesehen, die radial zur Drehachse des Rades 6 beabstandet außenseitig der Bremsnabe 9 angeordnet sind.

Die Magnete 12 wirken mit einer Spule 14 zusammen. Diese ist zu den Magneten 12 radial beabstandet, und zwar unter Ausbildung eines Luftspalts. Die Spule 14 ist in Relation zu den Magneten 12 ortsfest am Gestell 2 angeordnet, so dass bei einer bestimmungsgemäßen Verdrehbewegung der Bremsnabe 9 eine Relativbewegung zwischen den Magneten 12 und der zugehörigen Spule 14 stattfindet.

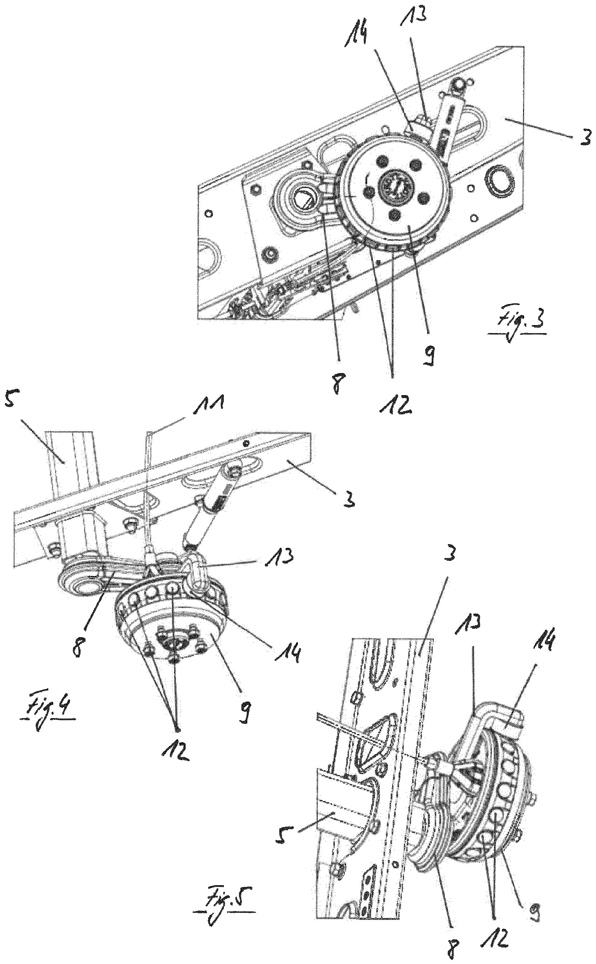

Zur ortsfesten Anordnung der Spule 14 am Gestell 2 ist ein Spulenhalter 13 vorgesehen. Dieser kann direkt am Gestell 2 angebracht sein, alternativ aber auch am Schwinghebel 8 oder an einem Bremsträgerblech. Im gezeigten Ausführungsbeispiel ist der Halter 13 am Achsstummel angeschweißt, wie dies insbesondere die Darstellung nach Fig. 5 erahnen lässt.

Bei einer bestimmungsgemäßen Verdrehbewegung der Radnabe 9 kommt es zur Induzierung einer Spannung in der zugehörigen Spule 14. Die so erzeugte elektrische Energie kann in einem in den Figuren nicht näher dargestellten Akkumulator gespeichert werden. Zu diesem Zweck sind in den Figuren ebenfalls nicht gesondert dargestellte elektronische Einrichtungen vorgesehen, wie zum Beispiel Ladesysteme, Frequenzumrichter, Steuereinheiten und/oder dergleichen.

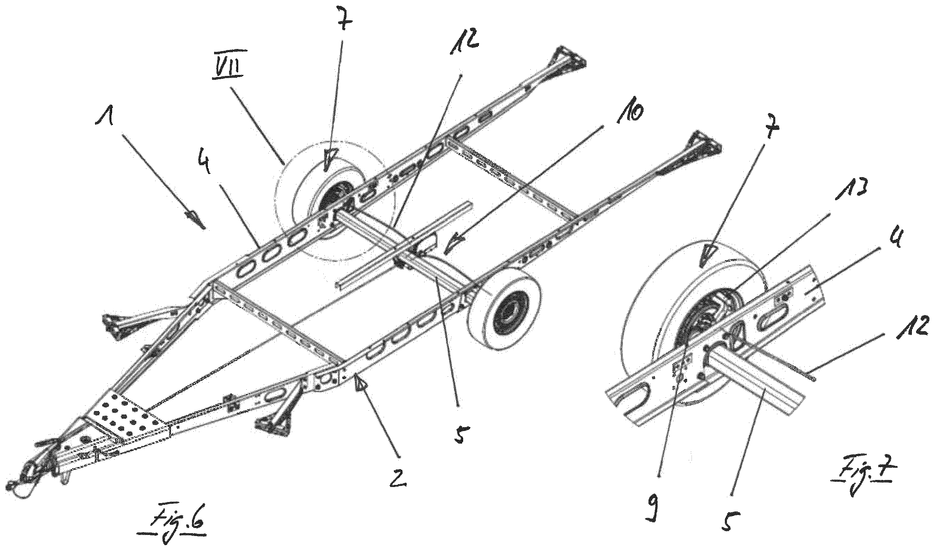

Die Fign. 6 und 7 lassen schließlich noch eine erfindungsgemäße Ausrüstung des Anhängers bezüglich des in Fahrrichtung rechten Rades 7 erkennen. Es kann dabei vorgesehen sein, beide Räder 6 und 7 mit einem entsprechenden Generator auszurüsten oder aber nur eines der beiden Räder 6 oder 7.

### Bezugszeichen

- 1: Chassis
- 2: Gestell (Rahmen)
- 3: Träger
- 4: Träger
- 5: Achse
- 6: Rad
- 7: Rad
- 8: Schwinghebel
- 9: Bremsnabe
- 10: Bremseinrichtung
- 11: Seilzug
- 12: Magnet (Permanentmagnet)
- 13: Halter
- 14: Spule
- 15: Felge
- 16: Reifen

## Patentansprüche

1. Fahrzeuganhänger, insbesondere Wohnanhänger, mit einem Chassis, das eine Achse (5) aufweist, die einendseitig mit einem ersten Rad (6) und anderendseitig mit einem zweiten Rad (7) zusammenwirkt, und das mit einer Bremseinrichtung (10) ausgestattet ist, die über endseitig der Achse (5) vorgesehene Bremsnaben (9) der Räder (6, 7) verfügt, wobei eine Bremsnabe (9) unter Zwischenordnung eines jeweiligen Schwinghebels (8) an der Achse (5) einendseitig angeordnet ist, und mit einem durch eine Bewegung des Anhängers antreibbaren elektrischen Generator, der durch Magnete und wenigstens eine Spule (14) gebildet ist, wobei die Magnete (12) in einem Ringbereich auf dem äußeren Gehäuseumfang einer Bremsnabe (9) oder auf einem separaten, zwischen einer Bremsnabe (9) und einer Felge (15) positionierten Magnetträger angeordnet sind und wobei die Spule (14) gegenüber der Bremsnabe (9) oder dem Magnetträger ortsfest am Anhänger angeordnet ist, wobei in der Spule (14) aufgrund der Bewegung der Magnete (12) eine Spannung induziert wird, wobei zur ortsfesten Anordnung der Spule (14) ein Spulenhalter (13) vorgesehen ist, der an einem zwischen Bremsnabe (9) und jeweils zugehörigem Schwinghebel (8) vorgesehenen Achsstummel eines Rads (6, 7) angeordnet ist, wobei die Spule (14) unter Belassung eines einen Spalt bildenden Abstandes zur Umlaufbahn der Magnete (12) angeordnet ist, wobei die Spule (14) hinsichtlich des Abstandes zur Umlaufbahn der Magnete (12) einstellbar ist.

2. Fahrzeuganhänger nach Anspruch 1, **dadurch gekennzeichnet, dass** die Magnete (12) Permanentmagnete sind, die abwechselnd mit unterschiedlicher Polarität angeordnet sind.

3. Fahrzeuganhänger nach Anspruch 1 oder 2, **dadurch gekennzeichnet, dass** die in der Spule (14) induzierte Spannung über einen Gleichrichter geführt ist.

## Claims

1. Vehicle trailer, in particular a caravan, with a chassis which has an axle (5) which cooperates at one end with a first wheel (6) and at the other end with a second wheel (7) and which is equipped with a braking device (10) which has brake hubs (9) of the wheels (6, 7) provided on the end of the axle (5), wherein a brake hub (9) is arranged on one end of the axle (5) with the interposition of a respective oscillating lever (8), and with an electric generator which can be driven by a movement of the trailer and is formed by magnets and at least one coil (14), wherein the magnets (12) are arranged in an annular region on the outer housing circumference of a brake hub (9) or on a separate magnet carrier positioned between a brake hub (9) and a rim (15), and the coil (14) being arranged in a stationary manner on the trailer with respect to the brake hub (9) or magnet carrier, a voltage being induced in the coil (14) as a result of the movement of the magnets (12), a coil holder (13) being provided for the stationary arrangement of the coil (14), which coil holder is arranged on an axle stub of a wheel (6, 7) provided between the brake hub (9) and the respectively associated oscillating lever (8), the coil (14) being arranged leaving a distance from the trajectory of the magnets (12) which forms a gap, the coil (14) being adjustable with respect to the distance from the trajectory of the magnets (12).

2. Vehicle trailer according to claim 1, **characterized in that** the magnets (12) are permanent magnets arranged alternately with different polarity.

3. Vehicle trailer according to claim 1 or 2, **characterized in that** the voltage induced in the coil (14) is guided via a rectifier.

## Revendications

1. Remorque de véhicule, en particulier remorque d'habitation, avec un châssis qui présente un essieu (5) qui coopère à une extrémité avec une première roue (6) et à l'autre extrémité avec une deuxième roue (7) et qui est équipé d'un dispositif de freinage (10) qui dispose de moyeux de freinage (9) des roues (6, 7) prévus à l'extrémité de l'essieu (5), un moyeu de frein (9) étant disposé à l'une des extrémités de l'essieu (5) avec interposition d'un levier oscillant (8) respectif, et avec un générateur électrique pouvant être entraîné par un mouvement de la remorque, générateur électrique qui est formé par des aimants et au moins une bobine (14), les aimants (12) étant disposés dans une zone annulaire sur la périphérie extérieure du boîtier d'un moyeu de frein (9) ou sur un support séparé (12) positionné entre un moyeu de frein (9) et une jante (15), et la bobine (14) étant disposée de manière fixe sur la remorque par rapport au moyeu de frein (9) ou au support magnétique, une tension étant induite dans la bobine (14) en raison du mouvement des aimants (12), un support de bobine (13) étant prévu pour la disposition fixe de la bobine (14), qui est disposé sur une fusée d'essieu d'une roue (6, 7) prévue entre le moyeu de frein (9) et le levier oscillant (8) respectivement associé, la bobine (14) étant disposée en laissant par rapport à la trajectoire des aimants (12) une distance formant un entrefer, la bobine (14) étant réglable en ce qui concerne la distance par rapport à la trajectoire des aimants (12).

2. Remorque de véhicule selon la revendication 1, **caractérisée en ce que** les aimants (12) sont des aimants permanents qui sont disposés en alternance avec des polarités différentes.

3. Remorque de véhicule selon la revendication 1 ou 2, **caractérisée en ce que** la tension induite dans la bobine (14) passe par un redresseur.
